# DEMANDE DE BREVET EUROPEEN

(11) **EP 1 655 101 A1**
(43) Date de publication de la demande: **10.05.2006**
(21) Numéro de dépôt: 05110373.7
(22) Date de dépôt: 04.11.2005
(51) Int. Cl.: B23Q 1/00, B23Q 3/18

(54) **Dispositf d'accouplement pour le positionnement et/ou l'entraînement d'une pièce par rapport à une autre**

(30) Priorité: 09.11.2004 CH 18382004
(71) Demandeur: Wagner, Eric, CH-1112 Echichens (CH)
(72) Inventeur: Wagner, Eric, CH-1112 Echichens (CH)
(74) Mandataire: Wenger, Joel-Théophile

(57) **Abrégé**

La présente invention concerne un dispositif d'accouplement pour le positionnement et/ou l'entraînement de pièces mécaniques. Ce dispositif d'accouplement (10) comprend au moins une partie femelle (12) et une partie mâle (11) destinées à s'emboîter l'une dans l'autre. Il est caractérisé en ce que la partie mâle (11) comporte un organe de couplage (16) ayant une section transversale en forme de courbe non-circulaire, formée par la réunion de secteurs arrondis, cet organe de couplage (16) étant de plus conique, et en ce que la partie femelle (12) comporte une cavité (17) complémentaire à l'organe de couplage (16) de la partie mâle (11).

Les parties mâle (11) et femelle (12) offrent ainsi un positionnement parfait de l'organe de couplage (16) de la partie mâle (11) dans la cavité (17) de la partie femelle (12), ces parties pouvant également s'entraîner de manière très rigide, sans jeu ni frottement.

## Description

### DOMAINE TECHNIQUE

La présente invention concerne un dispositif d'accouplement pour le positionnement et/ou l'entraînement de pièces mécaniques, ce dispositif d'accouplement comprenant au moins une partie femelle et une partie mâle destinées à s'emboîter l'une dans l'autre.

### TECHNIQUE ANTERIEURE

On connaît une multitude de dispositifs d'accouplement de pièces mécaniques utilisés dans de nombreux domaines techniques, ces dispositifs étant notamment utilisés pour positionner précisément des pièces brutes à usiner. De tels dispositifs peuvent être par exemple des dispositifs de serrage de pièces, comme des étaux ou des mandrins sur des fraiseuses ou des tours.

Ces systèmes sont souvent complexes et onéreux. De plus leurs particularités de construction pour ce qui concerne la précision du positionnement ne permettent pas de grands efforts d'entraînement rotatifs. Ils sont à manipuler avec le plus grand soin tant ils sont chers et fragiles, car le moindre choc ou déformation sur les organes de précision rend ces dispositifs totalement inutilisables.

Dans le domaine du positionnement de pièces, les dispositifs d'accouplement ont pour fonction de maintenir une pièce à traiter, par exemple à usiner, à assembler ou autre, dans une position fixe en vue du traitement. Dans ce cas, le dispositif d'accouplement peut être placé sur un support tel qu'une table de machine-outil notamment.

De tels dispositifs d'accouplement sont très utiles notamment en mécanique de précision. Que ce soit en cas d'usinage par enlèvement de copeaux ou par électroérosion, il est nécessaire d'utiliser ces dispositifs pour serrer les pièces. Ces dispositifs doivent eux-mêmes être montés sur les différentes machines utilisées. Il faut donc disposer d'un moyen pour les serrer et également pour les aligner et garantir une précision de positionnement.

Pour gagner du temps lors d'un éventuel changement de dispositif de serrage, comme un étau, qui nécessite un démontage et un nouveau réglage, il est avantageux de monter un système fixe sur la machine. Ce système recevra un autre élément de serrage fixé sur l'étau, positionnant ainsi directement celui-ci et se maintenant automatiquement en place par un moyen de tension. De tels dispositifs de serrage ne permettent pas un entraînement des pièces en rotation.

On connaît également le principe du cône qui garanti le positionnement de centrage d'un cône mâle par rapport à un cône femelle. Si le positionnement de centrage se fait sans jeu, il ne garantit toutefois pas le positionnement absolu d'un cône par rapport à l'autre, c'est-à-dire qu'il n'y a pas de positionnement angulaire possible.

Si l'on souhaite entraîner une pièce en rotation tout en assurant un positionnement précis, par exemple au moyen d'un cône, cet entraînement n'est possible que si l'on compte sur l'adhérence des deux corps.

Les accouplements connus pour l'entraînement rotatif de deux pièces utilisant un système de cône nécessitent un moyen d'entraînement qui peut être par exemple un système de clavettes ou autres rainures. Ces moyens occasionnent irrémédiablement à terme un certain jeu entre les organes d'entraînement et ne peuvent prétendre en un positionnement rotatif précis.

Dans le cas de l'entraînement d'une roue de véhicule, on obtient généralement le positionnement et le moyen d'entraînement à l'aide de plusieurs écrous que l'on serre sur les vis placées sur l'axe d'entraînement, et qui plaquent et centrent la roue contre une butée de l'axe d'entraînement. Elles donnent un positionnement relativement précis de la roue autour de l'axe. Ce système est toutefois difficile à mettre en oeuvre dans le domaine de la mécanique de précision et n'offre par un positionnement suffisamment précis et reproductible pour pouvoir être employé de façon efficace dans ce domaine.

Il en résulte qu'il n'existe aucun système d'accouplement de pièces qui assure un positionnement précis d'une pièce par rapport à une autre, tout en permettant l'entraînement en rotation des pièces.

### EXPOSE DE L'INVENTION

La présente invention se propose de pallier les inconvénients des systèmes de l'art antérieur en réalisant un système qui permette l'accouplement de pièces mécaniques tout en assurant un positionnement précis de ces pièces ainsi qu'un entraînement en rotation de celles-ci.

Ce but est atteint par un dispositif d'accouplement tel que défini en préambule et caractérisé en ce que la partie mâle comporte un organe de couplage ayant une section transversale en forme de courbe non-circulaire, formée par la réunion de secteurs arrondis, cet organe de couplage étant de plus conique, et en ce que la partie femelle comporte une cavité complémentaire à l'organe de couplage de la partie mâle.

Grâce à l'accouplement selon l'invention, on obtient un positionnement parfait et sans jeu dans tous les axes, ainsi qu'un moyen d'entraînement rotatif hautement rigide en même temps, avec les deux seules pièces mâle et femelle de cet accouplement.

La section de l'organe de couplage de la partie mâle ressemble à un trèfle en ce qu'elle comporte par exemple quatre côtés arrondis ou pétales, qui serraient prolongés de manière conique, offrant ainsi un ajustement parfait des deux parties mâle et femelle l'une dans l'autre.

Cet accouplement peut servir aussi bien de moyen de positionnement que d'entraînement de la partie mâle et de la partie femelle l'une par rapport à l'autre.

Un exemple d'utilisation possible est le positionnement précis de pièces sur une table de machine-outil en vue de l'usinage de la pièce.

En prolongeant les côtés arrondis dudit trèfle de manière conique, on obtient une forme telle que la partie mâle s'emboîte parfaitement et sans jeu dans la cavité de la partie femelle. Le positionnement serra précis dans tous les axes et peut servir avantageusement, notamment dans la mécanique de précision, pour positionner rapidement et précisément des tasseaux porte-outils, mandrins, ou quelconques dispositifs ou pièces brutes à usiner.

La présente invention a l'avantage de la simplicité du principe de forme et offre une grande robustesse.

Le principe de cette forme peut être retenu également dans l'entraînement de tasseaux porte-outils, comme sur une fraiseuse, où l'on utilise principalement des cônes pour la précision du centrage, mais qui doivent avoir un moyen d'entraînement supplémentaire, comme des rainures de clavettes, ce qui inclus l'inconvénient d'avoir obligatoirement un certain jeu dans l'axe de rotation. Ceci peut induire un effet de grippage du cône lors de grands efforts. Le positionnement est donc garanti grâce au cône, mais celui-ci ne garantit pas la position dans l'axe de rotation.

La présente invention pallie cet inconvénient par le fait que le jeu est supprimé et la précision du positionnement garantie dans tous les axes, l'entraînement se faisant sans jeu.

Il suffit d'utiliser un moyen pour maintenir la partie mâle dans la partie femelle. Cela peut être un moyen simple de serrage comme une vis, un quelconque système mécanique, pneumatique, par aimantation ou autre moyen pour tenir en place la partie mâle dans la partie femelle, qui se verront emboîtées l'une dans l'autre de manière très rigide.

### DESCRIPTION SOMMAIRE DES DESSINS

La présente invention et ses avantages seront mieux compris en référence aux figures annexées et à la description détaillée d'un mode de réalisation particulier, dans lesquelles :
- la figure 1 illustre une vue en perspective d'une partie mâle et d'une partie femelle formant le dispositif d'accouplement de l'invention;
- la figure 2 est une vue de dessus d'une autre forme de réalisation de la partie femelle du dispositif de l'invention; et
- la figure 3 est une vue en coupe d'un mode de réalisation particulier du dispositif de l'invention.

### MANIERES DE REALISER L'INVENTION

En référence aux figures, le dispositif d'accouplement 10 selon la présente invention est formé essentiellement d'une partie mâle 11, d'une partie femelle 12, de moyens 13 de maintien amovibles de la partie mâle 11 et de la partie femelle 12, de moyens 14 pour fixer la partie mâle à un objet et de moyens 15 pour fixer la partie femelle à un objet.

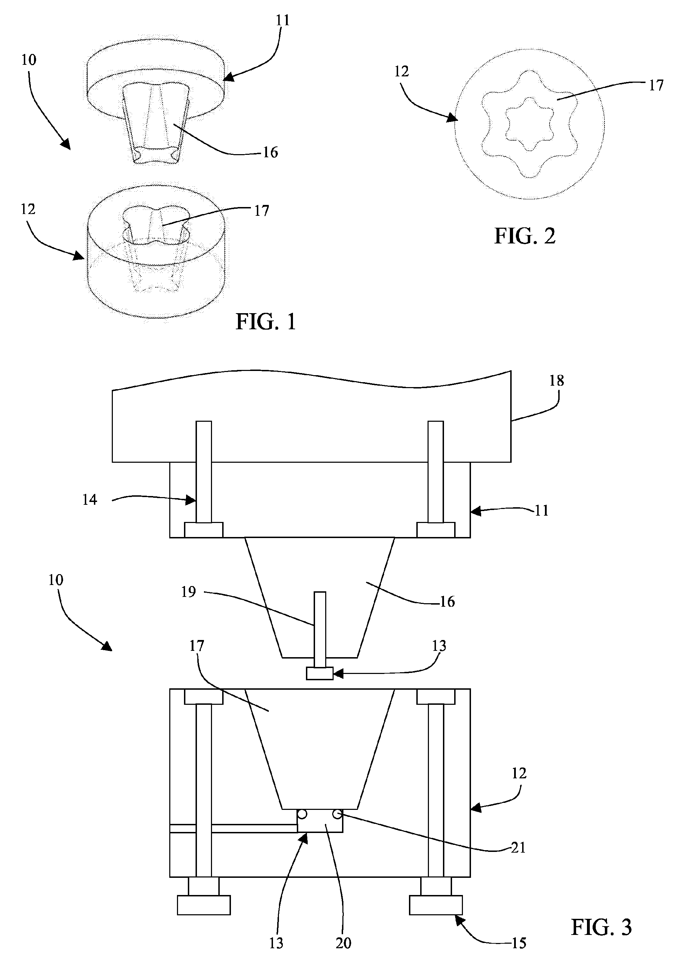

La figure 1 illustre un mode de réalisation non limitatif du dispositif d'accouplement de l'invention. Dans cette figure, seule la partie mâle 11 et la partie femelle 12 sont représentées. La partie mâle comporte un organe de couplage 16 ayant une section transversale non-circulaire, formée par la réunion de quatre secteurs arrondis. Cette section transversale ressemble approximativement à un trèfle avec quatre côtés arrondis. L'ensemble de cette forme est prolongé de manière conique.

La partie femelle 12 comporte une cavité 17 ayant une forme complémentaire à l'organe de couplage 16 de la partie mâle. Lorsque les parties mâles et femelle sont montées, l'organe de couplage s'emboîte parfaitement dans la cavité de la partie femelle 12. Grâce à cette configuration, la partie mâle 11 se positionne précisément dans la cavité 17 de la partie femelle 12 et pourra également entraîner celle-ci.

La fig. 2 illustre un dispositif similaire à celui de la figure 1. Il diffère par la forme de l'organe de couplage de la partie mâle et la cavité 17 de la partie femelle 12. Au lieu d'avoir une forme de "trèfle" à quatre côtés arrondis, il y a six côtés arrondis. Ce mode de réalisation peut être intéressant dans le cas où les positions d'une pièce à usiner peuvent être modifiées par pas de 60 degrés. Ainsi, en laissant la partie mâle par exemple fixée sur un plateau de machine d'usinage, il est possible de positionner la partie femelle, qui peut maintenir la pièce à usiner, dans différentes positions séparées angulairement de 60 degrés.

La figure 3 illustre de façon plus détaillée un mode de réalisation particulier dans lequel la partie femelle 12 est destinée à être maintenue sur un plateau de machine-outil (non représentée) et la partie mâle 11 est destinée à maintenir une pièce 18 à usiner. Cette figure illustre également l'une des manières possibles de maintenir la partie mâle et la partie femelle solidaires en particulier pendant l'usinage d'une pièce mécanique.

Dans ce mode de réalisation, la partie femelle 12 comporte des moyens de fixation 15 sur un support tel qu'une table de machine-outil. Ces moyens de fixation peuvent par exemple être formés par des entretoises destinées à être introduites dans des rainures du plateau de la machine-outil. La partie femelle comporte également deux alésages dans lesquels peuvent être placées des vis destinées à plaquer la partie femelle 12 contre le support et à maintenir cette partie femelle en place.

La partie mâle 11 et la partie femelle 12 comportent en outre des moyens de maintien 13 permettant de les rendre solidaires l'une de l'autre. Ces moyens de maintien peuvent par exemple être une vis. Toutefois, afin de faciliter le maintient ou le retrait de l'une des parties par rapport à l'autre, des moyens de maintien tels qu'un système pneumatique sont idéaux. D'autres moyens de maintien, par exemple par électroaimant pourraient également être envisagés.

Dans le cas d'un système pneumatique, comme cela est illustré par la figure 3, la partie mâle 11 comprend une vis 19 ayant une tête de vis qui s'engage dans un logement 20 de la partie femelle. La tête de la vis est maintenue par des billes 21. Cette tête de vis peut être soit maintenue soit libérée lors de l'application d'air comprimé. Un tel système est avantageux du fait qu'il permet une manipulation simple du dispositif d'accouplement, sans nécessiter un accès par les faces supérieures ou inférieures des parties du système. En effet, l'accès à ces faces peut être difficile voire impossible selon le type d'usinage ou de pièce à entreprendre.

Un tel dispositif d'accouplement peut également être utilisé pour maintenir une pièce qui doit être usinée selon un mouvement rotatif tel que du tournage ou du perçage. Dans ce cas, la partie femelle peut être maintenue directement dans les mors d'un tour par exemple. Grâce à la forme de la cavité 17 et de l'organe de couplage 16, l'entraînement de la partie femelle 12 au moyen du tour génère également l'entraînement de la partie mâle 11 et par conséquent de la pièce 18 à usiner.

La cavité 17 de la partie femelle 12 pourrait être réalisée dans une roue entraînée par un arbre de transmission dont l'extrémité formerait l'organe de couplage de la partie mâle 11. Comme précédemment, il faut prévoir des moyens de maintien 13 de la partie femelle 12 dans la partie mâle 11.

La partie mâle 11 pourrait également remplacer par exemple le cône d'un porte-outils de fraiseuse, ou être placé derrière un mandrin de tour, qui pourraient être ainsi rapidement positionné, en vue notamment de changement de ces divers moyens de serrage sur les différentes machines.

Tout en restant précis dans le positionnement et offrant une grande rigidité, ce dispositif d'accouplement permet également un entraînement rotatif hautement robuste et sans jeu.

Les côtés arrondis de la forme de l'organe de couplage 16 et de la cavité 17, qui sont prolongés de manière conique, assurant un emboîtement parfait, sans jeu, à la manière de plusieurs cônes mis côte à côte.

Les parties coniques du dispositif de cette invention peuvent être de toutes dimensions et de toutes proportions selon les besoins de la pratique. On peut également positionner la partie mâle 11 dans la partie femelle 12 dans les différentes positions d'angles, suivant la quantité de côtés de la forme dite en trèfle. Dans l'exemple de la figure 1, ceci correspond à des décalages angulaires de 90°. Ils correspondent à 60° dans la figure 2.

Dans les exemples décrits ci-dessus, le rôle de la partie mâle et de la partie femelle pourraient être inversé, c'est-à-dire que par exemple dans la figure 3, la partie mâle pourrait être fixée au support alors que la pièce à usiner serrait fixée à la partie femelle.

Selon une variante, l'organe de couplage de la partie mâle pourrait être tel qu'il puisse être introduit dans la cavité de la partie femelle sans toutefois que cet organe et cette cavité correspondent exactement. En effet, à titre d'exemple, la cavité pourrait avoir la forme illustrée par la figure 2, c'est-à-dire avec six "sommets", alors que l'organe de couplage pourrait comporter trois sommets, correspondant à un triangle équilatéral aux coins arrondis. Ces trois sommets pourraient correspondre à trois sommets non-adjacents de la cavité.

Afin d'assurer une haute précision de répétitivité du positionnement, les points de contacts entre l'organe de couplage de la partie mâle et la cavité de la partie femelle sont avantageusement réalisés par rectification par meulage.

## Revendications

1. Dispositif d'accouplement pour le positionnement et/ou l'entraînement de pièces mécaniques, ce dispositif d'accouplement comprenant au moins une partie femelle et une partie mâle destinées à s'emboîter l'une dans l'autre, **caractérisé en ce que** la partie mâle (11) comporte un organe de couplage (16) ayant une section transversale en forme de courbe non-circulaire, formée par la réunion de secteurs arrondis, cet organe de couplage (16) étant de plus conique, et **en ce que** la partie femelle (12) comporte une cavité (17) complémentaire à l'organe de couplage (16) de la partie mâle (11).

2. Dispositif d'accouplement selon la revendication 1, **caractérisé en ce que** ladite courbe est formée d'au moins quatre secteurs arrondis reliés entre eux.

3. Dispositif d'accouplement selon la revendication 1 ou 2, **caractérisé en ce que** ladite courbe comporte au moins une partie concave et une partie convexe.

4. Dispositif d'accouplement selon l'une quelconque des revendications précédentes, **caractérisé en ce qu'**au moins l'une des parties mâle (11) ou femelle (12) comporte des moyens de maintien (13) agencés pour rendre solidaires la partie mâle et la partie femelle.

5. Dispositif d'accouplement selon la revendication 4, **caractérisé en ce que** les moyens de maintien (13) comportent au moins une fixation par vis.

6. Dispositif d'accouplement selon la revendication 4, **caractérisé en ce que** les moyens de maintien (13) comportent au moins un aimant.

7. Dispositif d'accouplement selon la revendication 4, **caractérisé en ce que** les moyens de maintien (13) comportent au moins un organe de retenue actionné par des moyens pneumatiques.

8. Dispositif d'accouplement selon l'une quelconque des revendications précédentes, **caractérisé en ce qu'**au moins l'une des parties mâle (11) ou femelle (12) comporte des moyens de fixation (15) sur un support.

9. Dispositif d'accouplement selon l'une quelconque des revendications précédentes, **caractérisé en ce qu'**au moins l'une des parties mâle (11) ou femelle (12) comporte des moyens de fixation (14) d'une pièce mécanique.
